Europäisches Patentamt

(19) European Patent Office

Office européen des brevets

(11) Publication number: **0 239 506**
**A2**

# (12) EUROPEAN PATENT APPLICATION

(21) Application number: **87400699.2**

(22) Date of filing: **27.03.87**

(51) Int. Cl.⁴: **G 01 J 9/04**

(30) Priority: **28.03.86 US 845925**

(43) Date of publication of application: **30.09.87**
**Bulletin 87/40**

(84) Designated Contracting States: **DE FR GB**

(71) Applicant: **ZYGO CORPORATION, Laurel Brook Road, Middlefield Connecticut 06455 (US)**

(72) Inventor: **Sommargren, Gary E., 119 Neck Road, Madison Connecticut 06443 (US)**
Inventor: **Young, Peter S., 307 Cherry Hill Road, Middlefield Connecticut 06455 (US)**

(74) Representative: **Levesque, Denys et al, Cabinet Beau de Loménie 55, rue d'Amsterdam, F-75008 Paris (FR)**

(54) **Differential plane mirror interferometer.**

(57) A differential plane mirror interferometer comprises a source (10) which emits a light beam (12) containing two orthogonally polarized components of different frequencies; a source of a stabilized electrical reference signal (11) of a frequency corresponding to the frequency difference between the two components of the light beam; a beamsplitter/ beam folder (16A) and a half-wave plate (29A) for converting said beam into two parallel beams (30, 33) with the same polarization; means including a polarizing beamsplitter (40), for causing each of the beams (30, 33) to be reflected twice by one of two plane mirrors (71, 70) to produce two parallel output beams (60, 63) with the same polarization; means including a half-wave plate (29B) and a beamsplitter/beam folder (16B) for converting said two output beams into a single output beam (80) in which the phase difference between the two components is proportional to the optical path length between the two mirrors (70, 71); a photoelectric detector (83) to produce the measurement signal (85); and a phase/ meter accumulator (90) to indicate the phase difference between the reference and measurement signals (11, 85) which is proportional to the changes in the optical path length between said two mirrors.

## DIFFERENTIAL PLANE MIRROR INTERFEROMETER

The present invention relates to apparatus for the measurement of optical path length changes between two plane mirror surfaces. More particularly, the invention relates to optical apparatus which is useful for high accuracy displacement metrology using interferometry.

An interferometer is a basic instrument for most high accuracy displacement measurements in dilatometry, material stability studies, the machine tool industry, and in the semiconductor fabrication industry. One type of interferometer representative of the current state-of-the-art is the differential plane mirror interferometer which measures the optical path length changes between two external mirrors and which is described in R.R. Baldwin and G.J. Siddall, "A double pass attachment for the linear and plane interferometer; "Proc. SPIE, Vol. 480, pp. 78-83 (May 1984). A conventional differential plane mirror interferometer consists of a fixed plane mirror and a movable plane mirror, which form the interferometer cavity, and auxiliary optical components (retroreflectors, wave plates, mirrors, beamsplitters). This type of interferometer has an inherent optical resolution of one quarter of the wavelength of the light used and has particularly high stability which is necessary for the ever increasing demand for improved accuracy. Thus, it is particularly insensitive to any tilt of the plane mirrors and motion of the auxiliary optic components.

References, M. Okaji and H. Imai, "High-Resolution Multifold Path Interferometers for Dilatometric Measurements," J.Phys. E: Scientific Instruments, Volume 16, pp. 1208-1213, 1983, and M. Okaji and H.Imai, "A Practical Measurement System for the Accurate Determination of Linear Thermal Expansion Coefficients," J. Phys., E: Scientific Instruments, Vol. 17, pp 669-673, 1984, illustrate other embodiments of differential plane mirror interferometers.

The conventional differential plane mirror interferometer is, however, overly complicated, requiring many auxiliary optical components thereby subjecting the measurement beams to many

0239506

2

reflections. These drawbacks ultimately limit the accuracy that can be achieved due to a lower signal-to-noise in the measurement signal as a result of reduced optical beam power and polarization leakage.

In commonly owned, co-pending European Patent Application No. 86. 402882.4, entitled "Differential Plane Mirror Interferometer", filed December 19, 1986, the contents of which are specifically incorporated by reference herein, an improved differential plane mirror interferometer is disclosed in which the use of a shear plate not only reduces the number of optical elements but also reduces the number of reflections by nearly 50%.

The present invention retains the basic plane mirror interferometer cavity of the conventional differential plane mirror and the simplicity of the co-pending shear plate interferometer described in the aforementioned co-pending Patent Application; however, it uses a beamsplitter/beam folder assembly to generate and recombine two separated, parallel, orthogonally polarized beams instead of the previously disclosed shear plate. Since the optical efficiency of the prism elements of the present invention can be higher than that of the previously disclosed shear plate, the signal-to-noise and, thusly, the number of interferometers which can be used with a single laser source can be greater with this type of system.

The instant invention provides a differential plane mirror interferometer system of the kind described in the aforementioned Patent Application, which is capable of measuring accurately either changes in length or changes in optical length and comprises: (1) a source of an input beam with two stabilized optical frequencies, with the two different frequencies orthogonally polarized, and with a frequency difference between the two frequencies equal to $f_o$, (2) means in said source, either a frequency stabilized electronic oscillator or a photoelectric mixer with electronic amplifier, for providing an electrical reference signal which corresponds to the frequency difference,

$f_o$, between said two stabilized optical frequencies; (3) means for converting said input beam into two separated, parallel, orthogonally polarized beams; (4) means, most preferably a half-wave retardation plate, located in one of said separated beams, for converting said two separated, parallel, orthogonally polarized beams into two separated, parallel, beams with the same polarization; (5) means, most preferably a polarizing beamsplitter, quarter-wave retardation plate, and retroreflector, for causing each of said separated, parallel beams with the same polarization to be reflected twice by one of two plane mirrors, respectively, to produce two parallel output beams with the same polarization; (6) means, most preferably a half-wave retardation plate, located in one of said separated, parallel output beams for converting said two separated, parallel output beams of the same polarization into two separated, parallel output beams with orthogonal polarization; (7) means for converting said two separated, parallel, orthogonally polarized output beams into a single output beam in which the phase difference between the two frequency components of said single output beam is directly proportional to the optical path length between said two plane mirrors; (8) means, most preferably a polarizer, for mixing said orthogonal components of said single output beam; (9) means, most preferably a photoelectric detector, to produce an electrical measurement signal; and (10) means, most preferably a phase meter/accumulator, to indicate the difference in phase between said electrical reference signal and said electrical measurement signal, said difference in phase being proportional to the optical path length changes between said two plane mirrors.

According to the invention, said means for converting said input beam into two separated parallel orthogonally polarized input beams comprises a beamsplitter/beam folder assembly means and said means for converting said output beams into a single output beam having a pair of othogonally polarized frequency components comprises a beamsplitter/beam folder assembly means.

In the drawings,

Fig. 1 depicts in schematic form one embodiment of the instant invention where all optical beams are in a single plane.

Fig. 2 depicts in schematic form a second embodiment of the instant invention where the optical beams are not in a single plane.

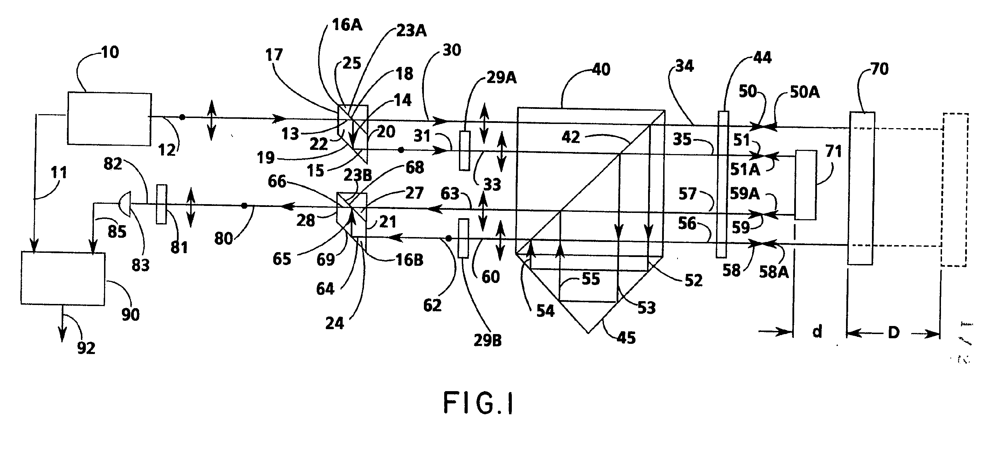

Figure 1 depicts in schematic form one embodiment of the instant invention where all optical beams are in a single plane. While the apparatus has application for a wide range of radiation sources, the following description is taken by way of example with respect to an optical measuring system. Light source 10, which most preferably uses a laser, emits input beam 12 which is comprised of two stabilized frequency components which are orthogonally polarized as indicated by the dot and arrow, see, for example, Bagley et al. U.S. Patent No. 3,458,259 issued July 26, 1969 and commonly owned, co-pending U.S. Patent Application Serial 710,947, entitled "Heterodyne Interferometer System", filed March 12, 1985 and European Patent Applications Nos. 86.400507.9, entitled "Apparatus to Transform a single Frequency, Linearly Polarized Laser Beam Into a Beam with Two Orthogonally Polarized Frequencies", filed March 11, 1986, 86.400505.3, entitled "Apparatus to Transform a Single Frequency, Linearly Polarized Laser Beam into a High Efficiency Beam with two Orthogonally Polarized Frequencies", filed March 11, 1986, and 86.402882.4, entitled "Differential Plane Mirror Interferometer", filed December 19, 1986, all of which are specifically incorporated by reference herein in their entirety.

Source 10 provides anelectrical reference signal 11 which corresponds to the frequency difference between the two stabilized frequencies.

Beam 12 is incident on a first beamsplitter/beam folder assembly 16A. Beamsplitter/beam folder assembly 16A is comprised of right angle prism 25 and rhomboid prism 22. The function of beamsplitter/beam folder assembly 16A is to spatially separate the two frequency components using conventional polarization techniques into two parallel beams. Beam 12 passes through surface 17 to become beam 13 which has the same polarization as beam 12. Surface 17 has an antireflection coating over the region where beam 12 passes through it. Polarizing coating 23A on surface 18 splits beam 13 so that one polarized frequency component is transmitted as beam 30 whereas the other orthogonally polarized frequency component is reflected as beam 14. Beam 14 is reflected by surface 19 with its state of polarization unaltered to become beam 15. Beam 15 passes through surface 20 to become beam 31 which has the same polarization as beam 15 and which is parallel to beam 30. Surface 20 has an antireflection coating over the regions where beams pass through it.

Beam 31 passes through half-wave retardation plate 29A which rotates the linear polarization of beam 31 by 90° so that resultant beam 33 has the same polarization (but still a different frequency) as beam 30. Beams 30 and 33 enter polarizing beamsplitter 40 with polarizing coating 42 and are transmitted as beams 34 and 35, respectively. Beams 34 and 35 pass through quarter-wave retardation plate 44 and are converted into circularly polarized beams 50 and 51, respectively. Beam 51 is reflected from fixed reference mirror 71 to become beam 51A while beam 50 is reflected from movable mirror 70 affixed to the stage whose relative position is being measured to become beam 50A. Beams 50A and 51A pass through quarter-wave retardation plate 44 and are converted back into linearly polarized beams which are orthogonally polarized to the original incident beams 34 and 35. Beams 50A and 51A are reflected by polarizing coating 42 to become beams 52 and 53. Beams 52 and 53 are reflected by retroreflector 45 to become beams 54 and 55. Beams 54 and 55 are reflected by polarizing coating 42 to become beams 56 and 57. Beams 56 and 57 pass through quarter-wave retardation plate 44 and are converted into circularly polarized beams 58 and 59.

Beam 59 is reflected from fixed reference mirror 71 to become beam 59A while beam 58 is reflected from movable mirror 70 to become beam 58A. Beams 58A and 59A pass back through quarter-wave retardation plate 44 and are converted back into linearly polarized beams which are polarized the same as the original incident beams 34 and 35. Beams 58A and 59A are transmitted by polarized coating 42 and leave polarizing beamsplitter 40 as beams 60 and 63. Beams 60 and 63 are mutually parallel by virtue of the inherent optical properties of retroflector 45, independent of any tilt that may be present between mirrors 70 and 71. Beam 60 passes through half-wave retardation plate 29B which rotates the linear polarization of beam 60 by $90^{o}$ so that resultant beam 62 has a linear polarization which is orthogonal to beam 63. The function of the second beamsplitter/beam folder assembly 16B is to recombine the two parallel, separated beams using conventional polarization techniques thereby accomplishing the inverse on the return leg of what was accomplished by the first beamsplitter/beam folder assembly 16A on the input leg. Similarly, beamsplitter/beam folder assembly 16B, like beamsplitter/beam folder assembly 16A, is comprised of right angle prism 27 and rhomboid prism 24. Beam 62 passes through surface 21 to become beam 64 which has the same polarization as beam 62. Surface 21 has an antireflection coating over the regions where beams pass through it. Beam 64 is totally reflected by surface 69 with its state of polarization unaltered to become beam 65. Beams 65 and 63 are recombined to form beam 66 by polarizing coating 23B. Surface 68 has polarizing coating 23B over the region where beams 65 and 63 intersect. Beam 66 passes through surface 28 to become beam 80. Surface 28 has an antireflection coating over the region where beam 66 passes through it.

Beam 80, like input beam 12, has two frequency components which are orthogonally polarized. Each frequency component has traversed exactly the same optical path length (through air and glass) except for the optical path, nd, between mirrors 70 and 71 where n is the index of refraction of the medium between mirrors 70 and 71 and d is the distance between mirrors 70 and 71. The optical path length nd corresponding to this distance, d, results in a phase difference between the two frequency components of beam 80. Motion of mirror 70 causes this phase difference to vary. This phase variation is directly proportional to the distance, D, moved by mirror 70 for a constant n and is measured by passing beam 80 through polarizer 81, oriented at $45^{o}$ to each polarization component, which mixes the two orthogonally polarized frequency components in beam 80 to give beam 82. Similarly, if d is fixed and n varies, then the phase variation is directly proportional to the change in n. The interference between the two frequency components is detected by photodetector 83 as a sinusoidal intensity variation with a frequency nominally equal to the difference frequency between the two components of beam 12. The variation of phase between sinusoidal electrical output 85 and sinusoidal electrical reference signal 11 is measured by the phase meter/accumulator 90, see for example the aforementioned commonly owned co-pending European Patent Applications Nos. 86.400506.1 and 86.402882.4, to provide the output 92 which is directly proportional to the change in optical path length between mirrors 70 and 71. This optical configuration is extremely insensitive to measurement error because changes in the other optical components, such as those induced mechanically or thermally, affect both frequency components equally and therefore have no influence on the measured phase variation 92. In addition, environmental effects, such as variations in the refractive index of air, can be minimized by placing mirror 71 close to mirror 70 to reduce the optical path length difference between the two frequency components. It should be noted that half-wave retardation plates 29A and 29B could be a single element with a hole in it to allow beam 63 to pass through it unaffected.

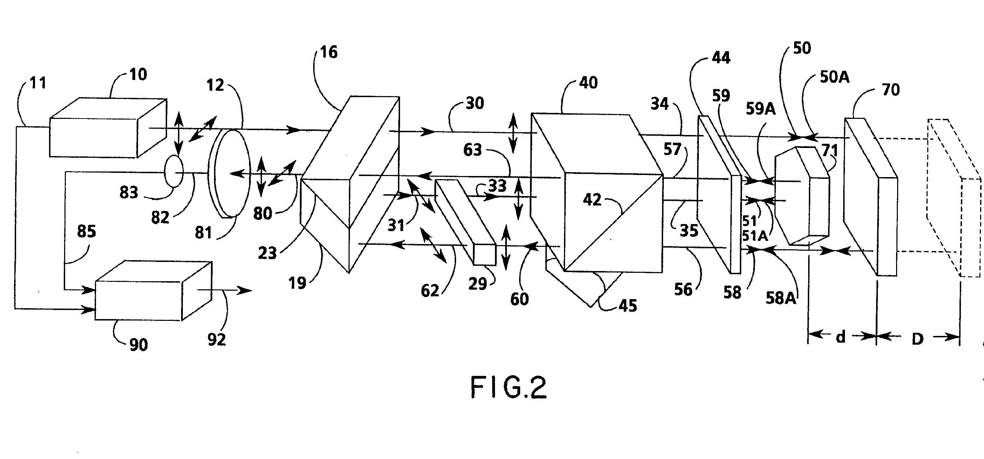

In any event, the presently preferred beamsplitter/beam folder assembly 16A for the input leg converts the single input beam into two parallel output beams 30 and 31 which have the same polarization as the input beam 12 but are spatially offset from each other, while beamsplitter/beam folder assembly 16B performs the inverse for the return leg in the presently preferred differential plane mirror interferometer. If desired, a single beamsplitter/beam folder assembly could be constructed to functionally perform the operations of the two beamsplitter/beam folder assemblies 16A and 16B without departing from the spirit and scope of the present invention, such as illustrated in the embodiment of Figure 2.

Figure 2 depicts in schematic form a second embodiment of the instant invention where the optical beams are not in a single plane. This configuration permits a more compact optical system. The description of this figure is identical to Figure 1 and is numbered correspondingly. The only differences are that now the two beamsplitter/beam folder assemblies 16A and 16B illustrated in the embodiments of Figure 1 are replaced by a single beamsplitter/beam folder assembly 16 and the two half-wave retardation plates 29A and 29B illustrated in the embodiment of Figure 1 are replaced by a single half-wave retardation plate 29.

Thus, in Figure 2, light source 10, which, as previously mentioned, most preferably uses a laser, emits input beam 12 which is comprised of two stabilized frequency components which are orthogonally polarized as indicated by the two arrows. Source 10 also provides an electrical reference signal 11 which again corresponds to the frequency difference between the two stabilized frequencies. Beam 12 is incident on the single beamsplitter/beam folder assembly 16. The function of beamsplitter/beam folder assembly 16 is the same as for the beamsplitter/beam folder assembly 16A of Figure 1, namely to spatially separate the two frequency components in beam 12 using conventional polarization techniques. This, in the embodiment of Figure 2, beam 12 is divided by beamsplitter/beam folder assembly 16, with the aid of antireflection coatings on the entrance and exit surfaces and polarizing coating 23 to become vertically polarized beam 30 and horizontally polarized beam 31. Beam 31 passes through the single half-wave retardation plate 29 which rotates the linear polarization of beam 31 by $90^{o}$ so that resultant beam 33 has the same polarization (but still a different frequency) as beam 30. Beams 30 and 33 enter polarizing beamsplitter 40 with polarizing coating 42 and are transmitted as beams 34 and 35 respectively. Beams 34 and 35 pass through quarter-wave retardation plate 44 and are converted into circularly polarized beams 50 and 51, respectively. Beam 51 is reflected from fixed reference mirror 71 to become beam 51A while beam 50 is reflected from movable mirror 70 affixed to the stage whose relative position is being measured to become 50A. Beams 50A and 51A pass back through quarter-wave retardation plate 44 and are converted back into linearly polarized beams that are orthogonally polarized to the original incident beams 34 and 35. Beams 50A and 51A are reflected by polarizing coating 42 to become beams 52 and 53. Beams 52 and 53 are reflected by retroreflector 45 to become beams 54 and 55. Beams 54 and 55 are reflected by polarizing coating 42 to become beams 56 and 57. Beams 56 and 57 pass through quarter-wave retardation plate 44 and are converted into circularly polarized beams 58 and 59. Beam 59 is reflected from fixed reference mirror 71 to become beam 59A while beam 58 is reflected from movable mirror 70 to become beam 58A. Beams 58A and 59A pass back through quarter-wave retardation plate 44 and are converted back into linearly polarized beams that are polarized the same as the original incident beams 34 and 35. Beams 58A and 59A are transmitted by polarized coating 42 and leave polarizing beamsplitter 40 as beams 60 and 63. Beams 60 and 63 are mutually parallel by virtue of the inherent optical properties of retroreflector 45, independent of any tilt that may be present between mirrors 70 and 71. Beam 60 passes through the single half-wave retardation plate 29 which rotates the linear polarization of beam 60 by 90° so that resultant beam 62 has a linear polarization which is orthogonal to beam 63. Beams 62 and 63 are combined by beamsplitter/beam folder assembly 16 in the same manner as accomplished by beamsplitter/beam folder assembly 16B of Figure 1, with the aid of antireflection coatings on the entrance and exit surfaces and polarizing coating 23 to become beam 80.

Once again beam 80, in the embodiment of Figure 2, like input beam 12, has two frequency components which are orthogonally polarized. Each frequency component, as was true with the Figure 1 embodiment, has traversed exactly the same optical path length (through air and glass) except for the optical path, nd, between mirrors 70 and 71 where n is the index of refraction of the medium between mirrors 70 and 71 and d is the distance between mirrors 70 and 71. The optical path length corresponding to this distance, d, results in a phase difference between the two frequency components of beam 80. Motion of mirror 70 causes this phase difference to vary. This phase variation is directly proportional to the distance, D, moved by mirror 70 for a constant n and is measured by passing beam 80 through polarizer 81, oriented at $45^{\circ}$ to each polarization component, which mixes the two orthogonally polarized frequency components in beam 80 to give beam 82. Similarly, if d is fixed and n varies, then the phase variation is directly proportional to the change in n. As was also true on the Figure 1 embodiment, the interference between the two frequency components is detected by photodetector 83 as a sinusoidal intensity variation with a frequency nominally equal to the difference frequency between the two components of beam 12. The variation of phase between sinusoidal electrical output 85 and sinusoidal electrical reference signal 11 is measured by the phase meter/accumulator 90, to provide the output 92 which, as previously mentioned with respect to the Figure 1 embodiment, is directly proportional to the change in optical path length, nd , between mirrors 70 and 71. Thus, both the Figure 1 and 2 embodiments employ optical configurations which are extremely insensitive to measurement error because of changes in the other optical components, such as those induced mechanically or thermally, affect both frequency components equally and therefore have no influence on the measured phase variation 92. In addition, as was previously mentioned with reference to the Figure 1 embodiment, environmental effects, such as variations in the refractive index of air, can be minimized by placing mirror 71 close to mirror 70 to reduce the optical path

0239506

length difference between the two frequency components.

The principal advantages of the instant invention are: (1) fewer number of optical components, (2) simpler beam paths, (3) fewer reflections, (4) greater light throughput efficiency, (5) smaller waveform distortion, (6) reduced optical leakage, (7) reduced non-linearity errors, and (8) lower cost.

Although the invention has been described with respect to a light source which emits two stabilized, orthogonally polarized beams of different frequencies, it can also be used when the frequencies are equal without departing from the spirit and scope of the present invention.

While a preferred embodiment of the invention has been disclosed, obviously modification can be made therein, without departing from the scope of the invention as defined in the following claims.

## CLAIMS

1.      A  differential   plane  mirror  interferometric  system comprising:

a pair of plane mirrors (70, 71) separable by a  variable optical path length (nd),

source  means  (10)  for emitting  an  input  beam  (12) comprising   two   stabilized   orthogonally   polarized   optical frequencies  having a frequency difference (fo), said source  means further  comprising  means for providing  an  electrical  reference signal  (11)  corresponding to said  frequency  difference  between said two stabilized optical frequencies;

means  (16A; 16) optically coupled to  said  input  beam (12)  for  converting said input beam into two  separated  parallel orthogonally polarized input beams (30, 31);

means (29, 29A) optically disposed in the path of one  of said  two  separated parallel orthogonally  polarized  input  beams (30,  31)  for converting said beams into  two  separated  parallel beams (30, 33) having the same polarization;

means (40, 45) optically coupled to said  two  separated parallel  same  polarized beams (30, 33) for causing each  of  said beams  to be reflected twice by one of said pair of  plane  mirrors (70,  71) to produce two parallel output beams (60, 63) having  the same polarization;

means (29; 29B) optically disposed in the path of one  of said  two separated same polarized parallel output beams  (60,  63) for converting said beams into two separated orthogonally polarized parallel output beams (62, 63);

means (16B; 16) optically coupled to said two  separated parallel  orthogonally  polarized  output  beams  (62,  63)  for converting said beams into a single output beam (80) having a  pair of  orthogonally  polarized  frequency  components,  with  a  phase difference  therebetween  being  directly  proportional  to  said variable  optical  path  length (nd) between  said  pair  of  plane mirrors (70, 71);

means (81) optically coupled to said single output beam (80) for mixing said orthogonally polarized components thereof and producing an electrical measurement signal (85) therefrom,

and means (90) operatively connected to said electrical measurement signal (85) and said electrical reference signal (11) for indicating a difference in phase between said electrical reference signal and said electrical measurement signal, said indicated phase difference (92) being proportional to said variable optical path length (nd) between said pair of plane mirrors (70, 71),

characterized in that said means for converting said input beam (12) into two separated parallel orthogonally polarized input beams (30, 31) comprises a beamsplitter/beam folder assembly means (16A; 16) and said means for converting said output beams (62, 63) into a single output beam (80) having a pair of orthogonally polarized frequency components comprises a beamsplitter/beam folder assembly means (16B; 16).

2.    An interferometric system in accordance with claim 1, wherein said beamsplitter/beam folder assembly meanss comprises a first set and a second set of regions of antireflection and polarizing coatings, said input beam converting means comprising said first set of regions and coatings and said means for converting said two separated parallel orthogonally polarized output beams (62, 63) into said single output beam (80) comprising said second set of regions and coatings.

3.    An interferometric system in accordance with claim 2, wherein said beamsplitter/beam folder assembly means is comprised of two distinct beamsplitter/beam folder assemblies (16A, 16B).

4.    An interferometric system in accordance with claim 2, wherein said beamsplitter/beam folder assembly means is comprised of one common beamsplitter/beam folder assembly (16).

5.    An interferometric system in accordance with claim 4, wherein said first and second regions of polarizing coatings comprise different portions of a common polarizing coating.

6.    An interferometric system in accordance with claim 4 or 5, wherein said common beamsplitter/beam folder assembly (16) comprises beam entrance and exit surfaces, said first and second regions of antireflection coatings being on said entrance and exit surfaces.

7.      An interferometric system in accordance with any of claims 3 to 6, wherein each beamsplitter/beam folder assembly (16A, 16B, 16) comprises a right angle prism (25) and a rhomboid prism (22).

8.      An interferometric system in accordance with any of claims 1 to 7, wherein said means for converting said two separated parallel orthogonally polarized input beams (30, 31) into said two separated parallel same polarized input beams (30, 33) comprises a half-wave retardation plate means (29A).

9.      An interferometric system in accordance with any of claims 1 to 8, wherein said means for converting said two separated parallel same polarized output beams (60, 63) into said two separated parallel orthogonally polarized output beams (62, 63) comprises a half-wave retardation plate means (29B).

10.      An interferometric system in accordance with any of claims 1 to 9, wherein said means for causing each of said separated parallel same polarized beams (30, 33) to be reflected twice by one of said pairs of plane mirrors (70, 71) comprises a polarizing beam splitter means (40) and a retroreflector means (45).

11.      An interferometric system in accordance with claim 10, wherein said means for causing each of said separated parallel same polarized beams to be reflected twice by one of said pairs of plane mirrors (70, 71) further comprises a quarter wave retardation plate means (44).

12.      An interferometric system in accordance with any of claims 1 to 11, wherein said means for producing said electrical measurement signal (85) comprises a polarizer means (81) for mixing said single output beam orthogonal components.

13.      An interferometric system in accordance with claim 12, wherein said means for producing said electrical measurement signal (85) further comprises a photoelectric detector (83).

15

0239506

14. An interferometric system in accordance with any of claims 1 to 13, wherein said phase difference indicating means composes a phase meter/accumulator means (90).

15. An interferometric system in accordance with any of claims 1 to 14, wherein said means (10) for providing an electrical reference signal (11) comprises a frequency stabilized electronic oscillator.

16. An interferometric system in accordance with any of claims 1 to 14, wherein said means (10) for providing an electrical reference signal (11) comprises a photoelectric mixer and an electronic amplifier means.

17. An interferometric system in accordance with any of claims 1 to 16, wherein one of said pair of plane mirrors (70, 71) is fixed and comprises a reference mirror (71) and the other of said pair of plane mirrors is movable for providing said variable distance (d) between said pair of separable plane mirrors.

18. An interferometric system in accordance with any of claims 1 to 16, wherein the distance (d) between said pair of plane mirrors (70, 71) is fixed for providing the variations in the index of refraction (n) of the medium between said pair of plane mirrors.

19. An interferometric system in accordance with any of claims 1 to 18, wherein all of said beams are in a single plane.

20. An interferometric system in accordance with any of claims 1 to 18, wherein all of said beams are optical beams and all of said optical beams are in a single plane.

21. An interferometric system in accordance with any of claims 1 to 18, wherein all of said beams are optical beams, said optical beams being in plurality of planes, with a given optical beam being in a given plane.

22. An interferometric system in accordance with any of claims 1 to 21, wherein said source means (10) comprises a laser.

FIG.I

0239506

0239506

FIG.2